# FASCICULE DE BREVET EUROPEEN

(11) **EP 0 789 719 B1**
(45) Date de publication et mention de la délivrance du brevet: **12.12.2001**
(21) Numéro de dépôt: 96930200.9
(22) Date de dépôt: 04.09.1996
(51) Int. Cl.: C08G 18/70, C09J 175/04

(54) **COMPOSITION DE POLYURETHANNE ET JOINT D'ETANCHEITE POUR VITRAGE**
POLYURETHANZUSAMMENSETZUNG UND VERGLASUNGSDICHTUNGS PROFIL
POLYURETHANE COMPOSITION AND GLAZING SEAL

(30) Priorité: 05.09.1995 FR 9510380
(43) Date de publication de la demande: 20.08.1997
(73) Titulaire: LE JOINT FRANCAIS, Société en Nom Collectif, F-75008 Paris (FR)
(72) Inventeur: RATH, Walter, D-61440 Oberursel (DE); KOCH, Markus, D-61348 Bad Homburg (DE); REICHARDT, Rüdiger, D-64625 Bensheim (DE)
(74) Mandataire: Ramey, Daniel
(86) Numéro de dépôt international: FR9601345
(87) Numéro de publication internationale: WO9709365

(56) Documents cités:
- EP-A- 0 433 068
- EP-A- 0 457 630
- EP-A- 0 489 611
- GB-A- 1 120 514
- US-A- 3 267 063

## Description

L'invention concerne l'utilisation d'une composition de polyuréthanne à deux composants, destinée notamment à former des joints d'étanchéité pour vitrage isolant ou vitrage double, dans une machine destinée à la réalisation de joints en polysulfure ainsi que les joints d'étanchéité formés à partir de cette composition et au moyen d'une telle machine.

Les vitrages isolants comprennent en général deux ou plusieurs plaques de verre séparées par des profilés formant entretoise et des joints d'étanchéité qui sont injectés ou formés in situ pour recouvrir les profilés et garnir l'espace entre les plaques de verre.

Ces joints sont le plus souvent réalisés en polysulfure à partir de deux composants qui sont mélangés dans des machines spécialement conçues à cet effet et dont sont équipés la plupart des fabricants de vitrages isolants.

Il a été proposé, par exemple dans le Brevet Américain n°4,063,002 de réaliser ces joints en polyuréthanne à partir de deux composants dont l'un est à base d'un composé polyhydroxylé, notamment un polybutadiène à terminaison hydroxyle, et dont l'autre est un durcisseur à base d'isocyanates, ces deux composants étant mélangés entre eux immédiatement avant formation des joints. Les joints en polyuréthanne ont l'avantage d'être moins coûteux et moins perméables à l'humidité que les joints en polysulfure mais ils ont l'inconvénient de ne pouvoir être utilisés dans les machines destinées à former les joints en polysulfure, essentiellement parce que le durcisseur des joints de polyuréthanne est par nature liquide alors que alors que les composants des polysulfures sont pâteux. Il serait possible de modifier les machines de formation des joints en polysulfure pour les adapter à la formation des joints en polyuréthanne, mais le coût de ces modifications serait élevé et disproportionné par rapport aux avantages qu'un fabricant de vitrages isolants peut retirer des joints en polyuréthanne. Il en résulte qu'actuellement les joints de ces vitrages sont encore réalisés en polysulfure alors que les joints en polyuréthanne sont plus performants et moins coûteux.

L'invention a pour but d'apporter une solution simple, efficace et peu coûteuse à ce problème.

Elle a pour objet l'utilisation d'une composition de polyuréthanne sur les machines conçues pour la formation de joints en polysulfure.

Elle a également pour objet des joints en polyuréthanne réalisés à partir de cette composition et sur ce type de machines.

Elle propose donc l'utilisation d'une composition de polyuréthanne à deux composants destinés à être mélangés immédiatement avant emploi en particulier pour former des joints d'étanchéité pour vitrage, dans une machine destinée à la réalisation de joints en polysulfure, ladite composition comprenant un composant à base de polyol, notamment de polybutadiène à terminaison hydroxyle et un durcisseur à base d'isocyanate, rendu pâteux ou visqueux par addition d'un agent épaississant ou thixotrope pour que sa viscosité soit comprise entre environ 10 et 30 Pa.s pour un taux de cisaillement de 100 s⁻¹ et que ladite composition soit utilisable dans une telle machine.

La composition ci-dessus définie, dont le composant à base de polyol est du type pâteux et dont le durcisseur à base d'isocyanate est également du type pâteux ou visqueux, est utilisable dans les machines conçues pour la réalisation de joints en polysulfure, moyennant une modification mineure ou un simple réglage de ces machines, et permet aux possesseurs de ces machines de réaliser des joints en polyuréthanne plus performants et moins coûteux.

Selon une autre caractéristique de l'invention, l'agent épaississant ou thixotrope comprend une charge inerte telle que de la craie, des silicates, des bentonites, du carbonate de calcium, du PVC, des

Le durcisseur peut aussi comprendre un pré-polymère à terminaison isocyanate ayant une viscosité relativement élevée, ou un mélange de ce pré-polymère et d'une charge inerte épaississante ou thixotrope du type précité.

Cette modification de la viscosité de l'agent durcisseur n'a pas d'influence négative sur la qualité du polyuréthanne et des joints résultants.

De façon générale, on a également constaté que les joints en polyuréthanne selon l'invention présentaient un meilleur facteur de fléchissement (sagging factor) que les joints en polyuréthanne connus jusqu'à présent, ce qui est un avantage inattendu et surprenant résultant de la modification du durcisseur de la composition selon l'invention.

Un autre avantage de l'invention est que l'utilisation d'un durcisseur pâteux ou visqueux permet un plus grand choix parmi les composants à base de polyols qui peuvent être associés à cet agent durcisseur pour former du polyuéthanne.

L'invention propose également un joint d'étanchéité pour vitrage caractérisé en ce qu'il est réalisé en polyuréthanne ayant une composition telle que définie ci-dessus, à l'aide d'une machine classique conçue pour la pose de joints en polysulfure.

L'invention a en outre pour objet l'utilisation d'une composition telle que définie ci-dessus pour réaliser un joint d'étanchéité pour vitrage au moyen d'une machine conçue pour la réalisation de joints en polysulfure.

De façon générale, l'invention a pour résultat une diminution du prix de revient des vitrages isolants et une augmentation de leur durée de service.

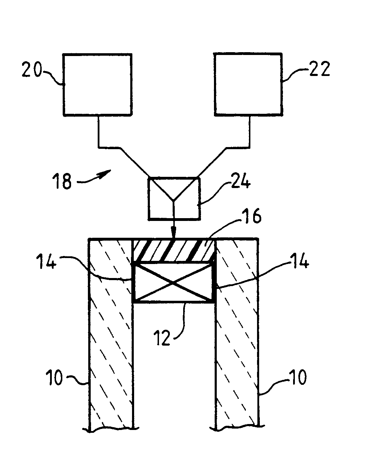

L'invention sera mieux comprise et d'autres caractéristiques, détails et avantages de celle-ci apparaîtront plus clairement à la lecture de la description qui suit, faite à titre d'exemple en référence au dessin annexé, qui est une vue schématique partielle en coupe d'un vitrage isolant selon l'invention.

Dans ce dessin, les références 10 désignent deux plaques de verre parallèles destinées à former un vitrage isolant, ou "double vitrage", ces deux plaques de verre étant réunies entre elles au voisinage de leurs bords par des profilés 12 formant entretoise, ces profilés étant par exemple métalliques et tubulaires et pouvant contenir un produit absorbant l'humidité. L'étanchéité peut être assurée d'une part au moyen d'une couche mince d'élastomère interposée entre les faces des profilés 12 et les plaques de verre 10 et d'autre part par un joint d'étanchéité 16 qui recouvre les profilés 12 et éventuellement les bords des plaques de verre en garnissant l'espace compris entre les bords de ces plaques.

Le volume entre les plaques de verre 10 peut être rempli d'un gaz inerte tel que l'argon, pour améliorer l'isolation.

Le joint d'étanchéité 16 est, conformément à l'invention, réalisé en polyuréthanne et est formé in situ au moyen d'une machine 18 comprenant des moyens 20, 22 d'amenée des deux composants du polyuréthanne à une tête 24 de mélange et d'injection, ces deux composants étant pâteux ou à viscosité relativement élevée et comprenant un composant à base de polyol et un durcisseur à base d'isocyanate, la machine 18 étant bien connue dans la technique et utilisée jusque-là pour la formation de joints en polysulfure.

De façon générale, la composition selon l'invention comprend des polymères liquides tels que des polybutadiènes à terminaison hydroxyle, des isocyanates, des plastifiants, des charges inertes, un catalyseur, des promoteurs d'adhérence au verre, et des additifs divers déjà connus dans la technique. Les isocyanates utilisés sont de préférence des di-isocyanates et des isocyanates polyfonctionnels, les plastifiants sont des esters d'acide phtalique, des esters d'acide adipique, des huiles minérales, etc... Les charges peuvent être du carbonate de calcium broyé ou précipité, des silicates tels que du talc, du kaolin, du noir de carbone, des silicates pyrogénés, en particulier de la silice pyrogénée à structure extrêmement fine, constituée de SiO₂ pratiquement pur en particules dont les dimensions moyennes sont par exemple de l'ordre de 0,01 (m, ces particules étant unies entré elles en aggrégats ayant la forme de chaînes ramifiées conférant à la silice pyrogénée de remarquables propriétés épaississantes et thixotropes. Les promoteurs d'adhérence peuvent être des silanes organiques fonctionnalisés.

La viscosité du durcisseur à base d'isocyanate (normalement liquide) est augmentée par utilisation d'un pré-polymère à terminaison isocyanate à viscosité élevée et/ou par addition d'une charge épaississante ou thixotrope telle que de la craie, des silicates, des bentonites, du carbonate de calcium, du PVC, des dérivés d'urée ou des dérivés acryliques, de la silice pyrogénée ou du noir de carbone, la quantité de charge étant typiquement de l'ordre de 15 à 25% en poids dans le durcisseur et pouvant plus généralement être comprise en 10 et 70 % en poids en fonction de son type et de l'effet recherché.

Une composition déjà connue de polyuréthanne et des exemples de compositions utiles selon l'invention sont donnés ci-dessous, les pourcentages indiqués étant en poids.

### Composition connue :

+ Composant à base de polyol :
   - polybutadiène à terminaison
      hydroxyle : 22%
   - plastifiant (DOP)
      (di-octyl-phtalate) : 20%
   - charge inerte (craie) : 58%
   - catalyseur (esters de mercure) : 0,04%
+ Durcisseur :
   - MDI liquide
      (diphénylméthanediisocyanate) : 50%
   - noir de carbone
      (servant de pigment) : 1%
   - silice pyrogénée : 3%
   - plastifiant (DOP) : 46%

### Compositions selon l'invention :

+ Composant à base de polyol : comme ci-dessus
+ Durcisseur :
   1 -
      . MDI liquide : 50%
      . noir de carbone : 25%
      . plastifiant (DOP) : 25%
   ou 2 -
      . MDI liquide : 50%
      . noir de carbone : 10%
      . silice pyrogénée : 6%
      . plastifiant (DOP) : 34%

Les durcisseurs des compositions connues ont une viscosité inférieure à 1,5 Pa.s pour un taux de cisaillement de 100 s⁻¹, cette viscosité étant par exemple de 0,4 Pa.s pour le durcisseur de la composition connue indiquée ci-dessus.

Les durcisseurs des compositions utiles selon l'invention ont une viscosité d'environ 10 à 30 Pa.s pour un taux de cisaillement de 100 s⁻¹, ce qui permet de les utiliser sans difficulté sur les machines conçues pour la formation de joints en polysulfure.

## Revendications

1. Utilisation d'une composition de polyuréthanne à deux composants destinés à être mélangés immédiatement avant emploi en particulier pour former des joints d'étanchéité pour vitrage, dans une machine destinée à la réalisation de joints en polysulfure, ladite composition comprenant un composant à base de polyol, notamment de polybutadiène à terminaison hydroxyle et un durcisseur à base d'isocyanate, rendu pâteux ou visqueux par addition d'un agent épaississant ou thixotrope pour que sa viscosité soit comprise entre environ 10 et 30 Pa.s pour un taux de cisaillement de 100 s⁻¹ et que ladite composition soit utilisable dans une telle machine.

2. Utilisation selon la revendication 1, **caractérisée en ce que** l'agent épaississant ou thixotrope comprend une charge inerte telle que de la craie, des silicates, des bentonites, du carbonate de calcium, du PVC, des dérivés d'urée, des dérivés acryliques, du noir de carbone ou de la silice pyrogénée, la quantité de charge inerte dans le durcisseur étant de l'ordre de 10 à 70% en poids.

3. Utilisation selon la revendication 2, **caractérisée en ce que** la quantité de charge inerte dans le durcisseur est de l'ordre de 15 à 25% en poids.

4. Utilisation selon l'une des revendications précédentes, **caractérisée en ce que** le durcisseur comprend un pré-polymère à terminaison isocyanate et à viscosité relativement élevée.

5. Composition selon l'une des revendications précédentes, **caractérisée en ce que** le durcisseur comprend un plastifiant, tel par exemple que du DOP.

6. Composition selon l'une des revendications précédentes, **caractérisée en ce que** le composant à base de polyol comprend également un plastifiant tel par exemple que du DOP, une charge inerte et un catalyseur.

7. Joint d'étanchéité pour vitrage, **caractérisé en ce qu'**il est réalisé en un polyuréthanne ayant une composition telle que définie dans l'une des revendications précédentes et **en ce qu'**il est posé au moyen d'une machine conçue pour la pose de joints en polysulfure.

## Patentansprüche

1. Verwendung einer Polyurethan-Zusammensetzung aus zwei Komponenten, die dazu bestimmt sind, unmittelbar vor Gebrauch vermischt zu werden, insbesondere zur Herstellung von Dichtungsverbindungen für Verglasungen in einer Maschine, die zur Herstellung von Polysulfid-Dichtungen konzipiert ist, wobei die Zusammensetzung eine Komponente auf Polyol-Basis, insbesondere Polybutadien mit endständigem Hydroxyl, und einen Härter auf Isocyanat-Basis umfaßt, wobei der Härter durch Zusatz eines Verdickungsmittels oder thixotropen Mittels viskos oder pastös gemacht ist, so daß seine Viskosität zwischen etwa 10 und 30 Pa.s bei einem Schergefälle von 100 s⁻¹ liegt und die Zusammensetzung in der genannten Maschine verwendbar ist.

2. Verwendung nach Anspruch 1, **dadurch gekennzeichnet, daß** das Verdickungsmittel oder thixotrope Mittel einen Inert-Füllstoff wie z.B. Kreide, Silicate, Bentonite, Calciumcarbonat, PVC, Harnstoff-Derivate, Acryl-Derivate, Ruß oder pyrogenes Kieselsäureanhydrid umfaßt, wobei die Menge des Inert-Füllstoffs in dem Härter in der Größenordnung von 10 bis 70 Gew.-% liegt.

3. Verwendung nach Anspruch 2, **dadurch gekennzeichnet, daß** die Menge des Inert-Füllstoffs in dem Härter in der Größenordnung von 15 bis 25 Gew.-% liegt.

4. Verwendung nach einem der vorangehenden Ansprüche, **dadurch gekennzeichnet, daß** der Härter ein Prepolymer mit endständigem Isocyanat und relativ hoher Viskosität umfaßt.

5. Verwendung nach einem der vorangehenden Ansprüche, **dadurch gekennzeichnet, daß** der Härter einen Weichmacher wie z.B. DOP umfaßt.

6. Verwendung nach einem der vorangehenden Ansprüche, **dadurch gekennzeichnet, daß** die Komponente auf Polyol-Basis ebenfalls einen Weichmacher wie z.B. DOP, einen Inert-Füllstoff und einen Katalysator umfaßt.

7. Dichtungsverbindung für Verglasungen, **dadurch gekennzeichnet, daß** sie aus einem Polyurethan hergestellt wird, das eine Zusammensetzung hat, wie sie in einem der vorangehenden Ansprüche definiert ist, und daß sie mit einer Maschine, die zur Herstellung von Polysulfid-Dichtungen konzipiert ist, hergestellt wird.

## Claims

1. Use of a polyurethane composition based on two components which are intended to be mixed immediately before use, in particular to form sealing joints for glazing, in a machinery designed for achieving polysulfide based sealants, said composition comprising a polyol-based component, notably an hydroxyl-terminated polybutadiene-based component, and an isocyanate-based hardener which becomes pasty or viscous by addition of a thickening or thixotropic agent so that its viscosity is comprised between about 10 and 30 Pa.s at a shear rate of 100 s⁻¹ and it is usable in such a machinery.

2. Use according to claim 1, **characterized in that** the thickening or thixotropic agent comprises an inert filler such as chalk, silicates, bentonites, calcium carbonate, PVC, urea derivates, carbon black or pyrogen silica, the amount of inert filler in the hardener being of about 10 to 70 % weight percent.

3. Use according to claim 2, **characterized in that** the amount of inert filler in the hardener is between 15 and 25 weight percent.

4. Use according to anyone of the preceding claims, **characterized in that** the hardener comprises an isocyanate terminated prepolymer with a relatively high viscosity.

5. Use according to anyone of the preceding claims, **characterized in that** the hardener comprises a plasticizer, e.g. DOP.

6. Use according to anyone of the preceding claims, **characterized in that** the polyol-based component a plasticizer, e.g. DOP, an inert filler and a catalyst.

7. Sealing joint for glazing, **characterized in that** it is achieved in a polyurethane having a composition as defined in anyone of the preceding claims and it is applied with a machinery designed for applying polysulfide sealants.
